# EUROPEAN PATENT APPLICATION

(11) **EP 2 210 776 A1**
(43) Date of publication of application: **28.07.2010**
(21) Application number: 08852285.9
(22) Date of filing: 14.10.2008
(51) Int. Cl.: B60R 1/00, B60R 1/074, B60R 1/12, G06T 3/00, H04N 7/18

(54) **IMAGE PROCESSING DEVICE AND METHOD, DRIVE ASSIST SYSTEM, AND VEHICLE**

(30) Priority: 21.11.2007 JP 2007301549
(71) Applicant: Sanyo Electric Co., Ltd., Osaka 570-8677 (JP)
(72) Inventor: HONGO, Hitoshi, Shijonawate-shi Osaka 575-0063 (JP)
(74) Representative: Glawe, Delfs, Moll
(86) International application number: PCT/JP2008/068537
(87) International publication number: WO 2009/066521

(57) **Abstract**

A camera is fixed in the mirror case of a door mirror downwardly in such a way that the front-rear wheels of a vehicle and the bottom edges of the sides of the vehicle (bottom portion) fit in view regardless of the state in which the door mirror is placed. The lower ends of the sides of the vehicle on a distortion corrected image is detected and a direction (121) in which the lower ends extend is estimated as the vehicle direction on the distortion corrected image by applying an edge extraction processing to the distortion corrected image after the application of a lens distortion correction to an original image acquired by the camera. A direction corrected image is generated by correcting the distortion corrected image so that the estimated vehicle direction faces the vertical direction on the image and an image in which part of the direction corrected image is clipped is displayed on a display.

## Description

### Technical Field

The present invention relates to an image processing device and method that apply an image process to an input image from a camera. Besides, the present invention relates to a driving assist system and a vehicle that use the image processing device and method.

### Background Art

An area right under a door mirror disposed on a passenger-seat side of a vehicle such as an automobile and the like and a surrounding area of a front wheel in the vicinity of the right-under area become blind spots for a driver. A system that uses a camera to display the blind spot with an image is already developed. For example, a system, which disposes a small camera with faced downward in a mirror case (mirror housing) of a door mirror, is well known (see patent document 1).

On the other hand, a vehicle in which a door mirror is movable and the door mirror is able to be stored is generally used. The door mirror is disposed at a storage position, so that an extension amount of the door mirror outside the vehicle becomes small and it becomes easy to put the vehicle in a garage. A change in the disposition position of the door mirror is achieved by a rotation motion of the mirror case about a plumb line as the rotational axis, for example.

However, in a case where the camera is fixed with faced downward in the mirror case of the movable door mirror, if the disposition position of the door mirror is changed from a usual position to a stored position by rotating the door mirror, an input image from the camera also changes in accordance with the change and a displayed image also changes. For example, an image that looks rotated in accordance with the rotation of the door mirror is displayed and visibility in the vicinity of the front wheel deteriorates.

To cooperate with such a movable door mirror, a method is proposed (see patent document 2), in which a drive mechanism that adjusts a camera angle is disposed to maintain a constant image-taking area even in a stored time like in a usual time.

[patent document 1]: JP-A-2000-16181
[patent document 2]: JP-A-2003-165384

### Disclosure of the Invention

### Problems to be Solved by the Invention

However, in this method, a drive mechanism that adjusts the camera angle with high accuracy by interacting with the driving of the door mirror becomes necessary, which causes cost increase of the system and the structure becomes complicated. Besides, if deviations in the storage position of the door mirror and the mounting angle of the camera occur and the adjustment accuracy of the drive mechanism deteriorates because of time-dependent change and the like, it becomes impossible to obtain a desired image. Besides, to obtain a desired image, it takes extremely much time to readjust the mounting angle and the like.

To solve the problems, it is an object of the present invention to provide an image processing device and an image correction method that contribute to a low price and a simple structure of a system that represents an input image from a camera in a desired form. Besides, it is another object of the present invention to provide a driving assist system and a vehicle that use those.

### Means for Solving the Problem

An image processing device according to the present invention includes: an image obtaining means that obtains an input image based on an image-taking result of a camera which is mounted on a vehicle and covers part of a vehicle main body in a view field; a vehicle direction estimation means that estimates a direction of the vehicle on the input image based on the input image; and an image correction means that corrects the input image based on the estimated direction of the vehicle to generate an output image.

Specifically, for example, a projection body capable of changing a disposition state with respect to the vehicle main body is mounted on an outside of the vehicle main body; the camera is mounted on the projection body and the view field of the camera changes together with a change in the disposition state; and the image correction portion applies a correction to the input image to reduce a change in the direction of the vehicle on the output image due to a change in the disposition state.

The direction of the vehicle on the input image changes together with a change in the disposition state; however, according to the above structure, the change in the direction of the vehicle on the output image due to the change is reduced. As a result, it becomes possible to represent an image of a desired form that does not give a feeling of a change in the disposition state. In achieving this, because a camera drive mechanism is unnecessary, a low price and a simple structure of a system that includes the image processing device are achieved. Further, the direction of the vehicle is estimated from an image-taking result and the input image is corrected based on the estimation result, so that even if deviations occur in the mounting angle of the camera and the like, it is possible to easily deal with the deviations.

More specifically, for example, the image correction means corrects the input image in such a way that the direction of the vehicle on the output image becomes a predetermined direction.

Besides, for example, the vehicle direction estimation means detects an edge portion on the input image that extends in a direction depending on the direction of the vehicle, thereby estimating the direction of the vehicle.

Besides, specifically, for example, the projection body is composed of a movable side mirror that is mounted on the vehicle main body.

Besides, for example, the image processing device further includes a change recognition means that recognizes the change in the disposition state of the projection body; wherein the vehicle direction estimation means estimates the direction of the vehicle after the recognition and at reference timing with respect to the recognition time point.

A driving assist system according to the present invention includes the camera and the image processing device; wherein an image that is obtained via the correction of the image correction means of the image processing device is output to a display means.

A vehicle according to the present invention is provided with the camera and the image processing device.

An image processing method according to the present invention includes the steps for: obtaining an input image based on an image-taking result of a camera which is mounted on a vehicle and covers part of a vehicle main body in a view field; estimating a direction of the vehicle on the input image based on the input image; and correcting the input image based on the estimated direction of the vehicle.

### Advantages of the Invention

The present invention contributes a low price and a simple structure of a system that represents an input image from a camera in a desired form.

The meaning and advantages of the present invention will be more apparent from the embodiments described below. Here, the following embodiments are each an embodiment of the present invention and the present invention and the meaning of a term of each constituent component are not limited to those described in the following embodiments.

### Brief Description of the Drawings

[Fig. 1] is a plan view showing a vehicle, from a left side, to which a driving assist system according to an embodiment of the present invention is applied.
[Figs. 2(a) and 2(b)] are plan views showing the vehicle in Fig. 1 from the top and from the rear, respectively.
[Figs. 3(a) and 3(b)] are plan views showing a door mirror of the vehicle in Fig. 1 from the rear (a plan view in a usual time and a plan view in a stored time).
[Fig. 4] is a block diagram of a driving assist system according to an embodiment of the present invention.
[Fig. 5] is a flow chart showing a flow of an entire operation of a driving assist system according to an embodiment of the present invention.
[Figs. 6(a) and 6(b)] are views showing an original image which an image input portion in Fig. 4 obtains and a distortion corrected image obtained by applying lens distortion correction to the original image, respectively.
[Fig. 7] is a view showing a distortion corrected image obtained in a time of storing the door mirror in Fig. 1 and a direction corrected image obtained by transforming the distortion corrected image.
[Fig. 8] is a view showing a door pattern example of a vehicle.

### List of Reference Symbols

- [10]: vehicle
- [11]: door mirror
- [11a]: mirror case
- [11b]: mirror surface body
- [11c]: mirror base
- [12]: left side surface
- [13]: lower end
- [14]: front wheel
- [15]: rear wheel
- [16]: vehicle main body
- [21]: camera
- [22]: image processing device
- [23]: display device

### Best Mode for Carrying Out the Invention

Hereinafter, the embodiments of the present invention are specifically described with reference to the drawings. In each referred drawing, the same portions are indicated by the same reference numbers and double description of the same portion is skipped in principle.

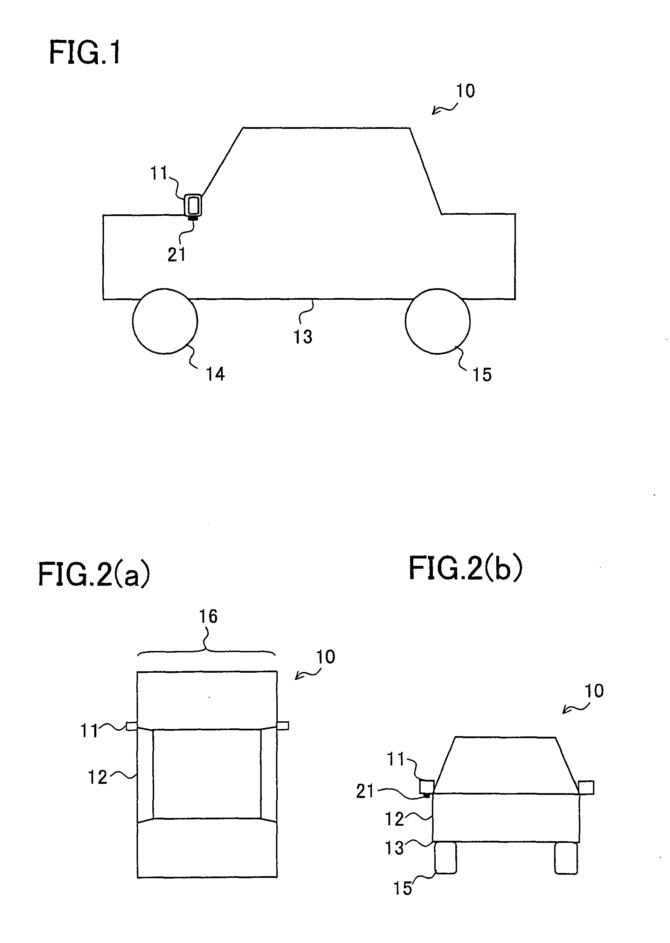

Fig. 1 is a plan view showing a vehicle 10, from a left side, to which a driving assist system according to an embodiment of the present invention is applied. Fig. 2(a) is a plan view showing the vehicle 10 from the top; and Fig. 2(b) is a plan view showing the vehicle 10 from the rear. Here, the vehicle 10 shown in Fig. 1 is a general passenger car; however, the driving assist system according to the embodiment of the present invention is applicable to arbitrary vehicles.

It is supposed that the vehicle 10 is situated on a road surface and the road surface is parallel to a horizontal surface. The terms "front," "rear," "left," and "right" are defined as follows in a two-dimensional coordinate system that is parallel to the road surface (the definition is the same as the general idea). A forward side of the vehicle 10 in a time the vehicle 10 advances straight on the road surface is defined as the "front," and the opposite side is defined as the "rear." In the above two-dimensional coordinate system, a direction that meets with the front-rear direction at right angles is defined as a left-right direction. The terms "left" and "right" mean the "left" and the "right" when looking forward from a driver's seat of the vehicle 10. Further, a plumb direction that meets with the road surface at right angles is defined as an top-bottom direction; an over-the-sky side is defined as the "top" and a road surface side is defined as the "bottom."

A driver's seat is disposed on a right side of a front portion in a vehicle main body 16 and a passenger seat is disposed on a left side. The vehicle 10 is composed by mounting vehicle components that include front wheels, rear wheels and door mirrors on the vehicle main body 16. The door mirror is a mirror with which a driver checks the rear and a diagonally rear side of the vehicle 10 and is mounted on the vehicle outside of the front-seat door. Usually, two door mirrors are mounted on the vehicle main body 16; however, now, only one door mirror 11 mounted on the left side (that is, the passenger seat) of the vehicle main body 16 is focused on. Also, two front wheels and two rear wheels are mounted on the vehicle main body 16; however, only one front wheel 14 and only one rear wheel 15 which are mounted on the left side of the vehicle main body 16 are focused on. When the vehicle 10 is seen from the top, the shape of the vehicle main body 16 is substantially rectangular and the door mirror 11 is so mounted on the vehicle main body 16 as to protrude from the left side of the rectangular shape. A reference number 12 indicates a left-side surface of the vehicle main body 16; and a reference number 13 indicates a lower end of the left-side surface 12.

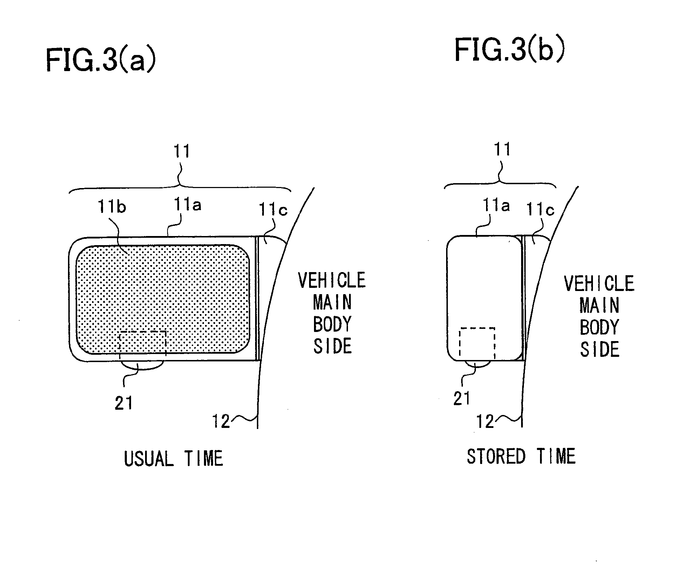

A camera 21 used to capture a blind spot of the driver near the front wheel 14 as an image is mounted (e.g., incorporated) in a lower portion of the door mirror 11. The door mirror 11 is a movable door mirror and also called as a storage-type door mirror. Figs. 3(a) and (b) each show a plan view of the door mirror 11 seen from the rear. Fig. 3 (a) is a plan view in a usual time; and Fig. 3(b) is a plan view in a stored time. The disposition state of the door mirror 11 with respect to the vehicle main body 16 changes between the usual time and the stored time. It is possible to call the disposition state here as a disposition state of a mirror case 11a that is a constituent component of the door mirror 11. Hereinafter, the disposition state in the usual time is called as a usual state and the disposition state in the stored time is called a stored state.

The door mirror 11 is composed of: the mirror case 11a; a mirror surface body 11b fitted in the mirror case 11a; and a mirror base 11c. A right end of the mirror base 11c is fixed to the vehicle main body 16; and the mirror case 11a is connected to the mirror base 11c in such a way that a left end of the mirror base 11c and a right end of the mirror case 11a come into contact with each other. The mirror case 11a is rotatable about an axis, that is, as a rotational axis, parallel to a plumb line in the connection portion between the mirror case 11a and the mirror base 11c. The mirror case 11a rotates about the axis as the rotational axis, so that the disposition state of the door mirror 11 is changed.

In a case where the vehicle 10 is running at a speed and the like, when the driver checks the rear and a diagonally rear side of the vehicle 10 by means of the mirror surface body 11b of the door mirror 11, the disposition state of the door mirror 11 is brought into the usual state. On the other hand, in a case where the vehicle 10 is put into a garage and the like, when it is desired to lessen an outward extension amount of the door mirror 11 outside the vehicle, the disposition state of the door mirror 11 is brought into the stored state. For example, the driver operates an operation button (not shown) disposed on the vehicle 10, so that the disposition state of the door mirror 11 is changed from the usual state to the stored state or from the stored state to the usual state.

The camera 21 is fixed to a lower portion of the mirror case 11a ; the camera 21 rotates together with rotation of the mirror case 11a and a view field (in other words, image-taking area) of the camera 21 changes together with the rotation. The camera 21 is composed and a mounting angle of the camera 21 and the like are adjusted in such a way that regardless of the disposition state of the door mirror 11, the camera 21 can take an image of an area in the vicinity of the front wheel 14 and a surrounding area of the vehicle 10 that includes the lower end 13 in the vicinity of the front wheel 14. Further, it is desirable that the rear wheel 15 is covered in the view field of the camera 21. In the following description, regardless of the disposition state of the door mirror 11, it is supposed that the front wheel 14, the rear wheel 15 and the lower end 13 between the front wheel 14 and the rear wheel 15 are covered in the view field of the camera 21.

For example, the camera 21 is composed by using a wide angle lens and an optical-axis direction of the camera 21 is matched with the plumb direction. Although exact matching of the rotational axis of the door mirror 11 (and the mirror case 11a) and the optical axis of the camera 21 is not necessary, it is desirable to match both approximately. Or, the optical-axis direction of the camera 21 is adjusted within an area where it is possible to take an image of a region to be taken. If the optical axis of the camera 21 is matched with the plumb direction, the rotational axis of the door mirror 11 (and the mirror case 11a) and the optical axis of the camera 21 match with each other, so that the camera 21 is able to cover substantially the same region in the view field even if the disposition state of the door mirror 11 is changed.

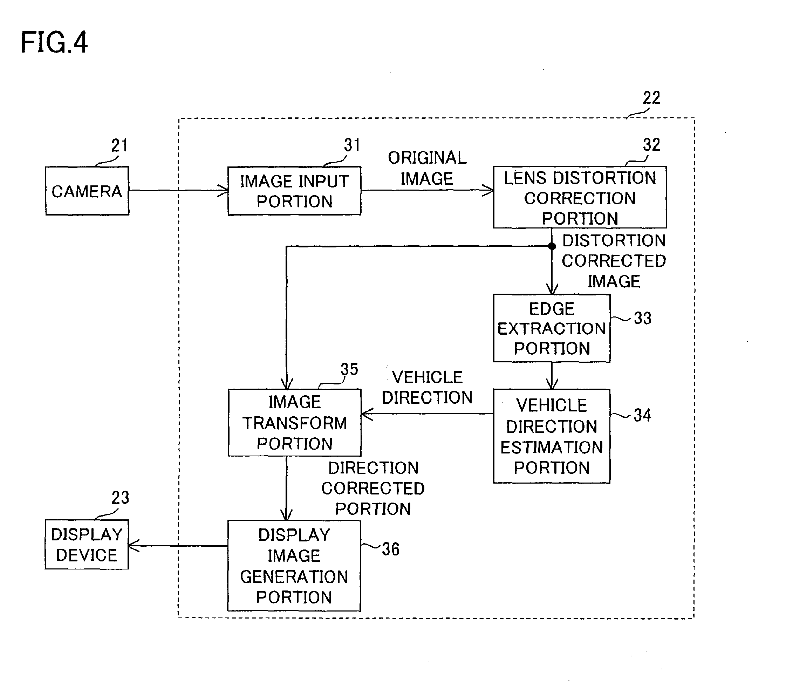

Fig. 4 shows a block diagram of the driving assist system applied to the vehicle 10. The driving assist system in Fig. 4 includes: the camera 21; an image processing device 22; and a display device 23. Besides, the driving assist system is provided with: a CPU (Central Processing Unit) that controls integrally the entire system; and a memory that stores an image and a program; however, they are not shown.

As the camera 21, for example, a camera that uses a CCD (Charge Coupled Device) or a camera that uses a CMOS (Complementary Metal Oxide Semiconductor) image sensor is used. The image processing device 22 is composed of an integrated circuit, for example. The display device 23 is composed of a liquid crystal display or the like. A display device included in a car navigation system and the like may be used as the display device 23 in the driving assist system. Besides, the image processing device 22 is able to be built in as part of the car navigation system. The image processing device 22 and the display device 23 are disposed in the vicinity of the driver's seat of the vehicle 10, for example.

The image processing device 22 includes portions indicated by reference numbers 31 to 36. The camera 21 periodically takes an image at a predetermined frame period (e.g., a period of 1/30 sec.) and successively send image data that represent the image (hereinafter, called an original image) obtained by the image taking to the image processing device 22.

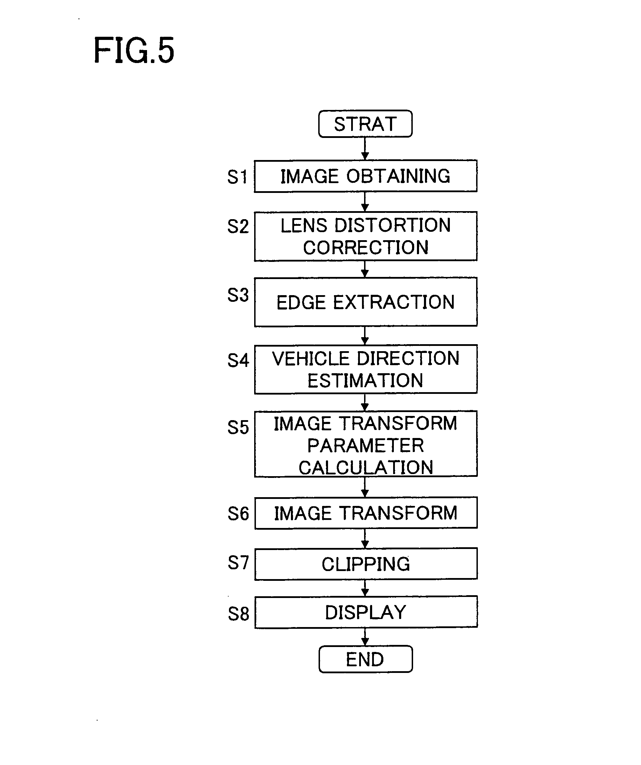

A flow, in which an image based on a sheet of original image is displayed on the display device 23 via an image process by the image processing device 22, is schematically described with reference to Fig. 5. Fig. 5 is a flow chart that shows the flow. First, an original image is obtained from the camera 21 and image data of the original image are stored into a frame memory (not shown) (the step S1). Lens distortion correction is applied to the original image (the step S2); an edge extraction process is applied to the image after the lens distortion correction to detect the lower end 13 of the left side surface 12 on the image; and a direction (hereinafter, called a vehicle direction) of the vehicle 10 on the image is estimated from the detection result (the steps S3 and S4). Thereafter, so that the estimated vehicle direction faces a desired direction on the image, the image after the lens distortion correction is geometric-transformed via calculation of an image transform parameter (the steps S5 and S6); part of the image after the transform is clipped and the clipped image is displayed on the display device 23 (the steps S7 and S8). Here, the vehicle direction, like a general understanding, matches with the traveling direction of the vehicle 10 in a time the vehicle 10 is running and has the same meaning as the front-rear direction of the vehicle 10.

Operation of each portion in the image processing device 22 is described in detail. An image input portion 31 receives an input of an original image from the camera 21. Specifically, the image input portion 31 receives image data of the original image that is periodically sent to and obtains the original image by storing the image data into the frame memory (not shown). Because a wide angle lens is used in the camera 21 to secure a wide view angle, a distortion is contained in the original image. For this reason, the lens distortion correction portion 32 applies lens distortion correction to the original image that the image input portion 31 obtains. As a method for lens distortion correction, a well-known arbitrary method such as a method described in JP-A-1993-176323 is usable. The original image after the lens distortion correction is also called a "distortion corrected image" below.

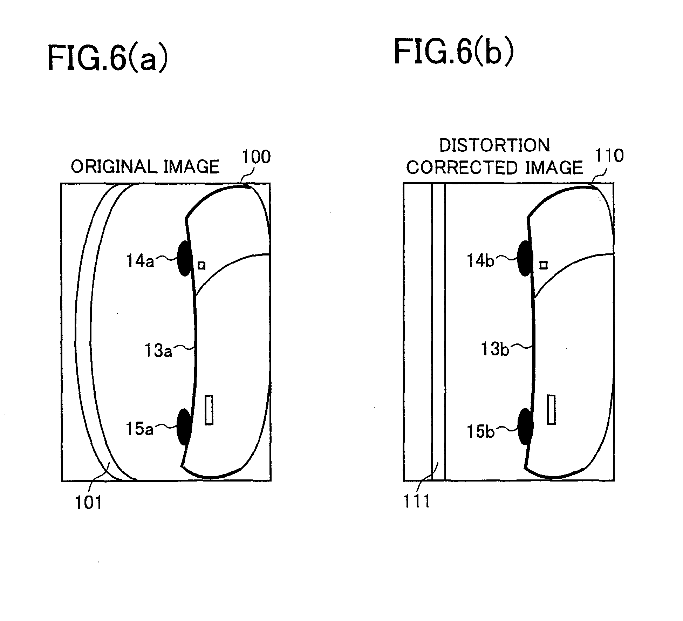

Fig. 6(a) shows an original image 100 as an example of the original image that contains a distortion; and Fig. 6(b) shows a distortion corrected image 110 obtained by applying the lens distortion correction to the original image 100. A curb stone on a road surface that extends straight in the front-rear direction of the vehicle 10 is present in the view field of the camera 21 in a time of taking the original image 100; a reference number 101 in Fig. 6(a) indicates a curb stone on the original image 100, while a reference number 111 in Fig. 6(b) indicates a curb stone on the distortion corrected image 110. It is understood that the distortion of the curb stone on the image is removed by the lens distortion correction.

Besides, in Fig. 6(a), a solid line 13a that extends in a vertical direction in the figure indicates the lower end 13 on the original image 100, and black colored ellipses 14a and 15a indicate the front wheel 14 and the rear wheel 15 on the original image 100, respectively (see Fig. 1, Figs. 2(a) and 2(b)). In Fig. 6(b), a solid line 13b that extends in a vertical direction in the figure indicates the lower end 13 on the distortion corrected image 110, and black colored ellipses 14b and 15b indicate the front wheel 14 and the rear wheel 15 on the distortion corrected image 110, respectively. Here, the original image 100 is an image obtained with the disposition state of the door mirror 11 kept in the usual state.

An edge extraction portion 33 applies an arbitrary edge extraction filter such as a differential filter, a Sobel filter or the like to the distortion corrected image, thereby extracting an edge portion from the distortion corrected image where brightness changes sharply in the distortion corrected image. In this way, at least the lower end 13 on the distortion corrected image is extracted as an edge portion. In the example of the distortion corrected image 110 in Fig. 6(b), the solid line 13b is extracted as an edge portion.

A vehicle direction estimation portion 34 detects the lower end 13 on the distortion corrected image from the extracted edge portion and estimates a direction, in which the lower end 13 extends on the distortion corrected image, as the vehicle direction on the distortion corrected image. In other words, in the example of the distortion corrected image 110 in Fig. 6(b), a direction in which the solid line 13b extends is estimated as the vehicle direction on the distortion corrected image. Although the solid line 13b slightly curves, the vehicle direction is estimated as the direction of the straight line by using straight-line approximation. Here, in the process in which the lower end 13 is detected from the extracted edge portion to estimate the vehicle direction, it is possible to use the publicly-known Hough transform.

Because the lower end 13 contains a long and strong edge component, the edge portion of the lower end 13 is extracted relatively easily and the lower end 13 on the distortion correction image is detected from the extraction result. Here, because a region where the lower end 13 is able to exist on the distortion corrected image is limited, it is desirable to predetermine a region where the edge extraction is performed. Specifically, the process of extracting an edge portion is performed on only a predetermined partial region of the entire region of the distortion corrected image as a target; and the vehicle direction may be estimated from the result. In this way, an erroneous detection of the vehicle direction is curbed and a burden of the process is reduced.

Besides, if the vehicle direction is estimated in a place where a white line is drawn on a road surface, a direction in which the white line is drawn is likely to be erroneously estimated as the vehicle direction. To avoid this, estimation accuracy of the vehicle direction may be raised by using tires of the front and rear wheels on the distortion corrected image as a feature portion and detecting the feature portion as well. Specifically, it is detected whether or not the tires of the front wheel 14 and the rear wheel 15 are present at both ends of the linear edge portion extracted by the edge extraction portion 33; only when the presence is detected, it is determined that the linear edge portion is the edge portion of the lower end 13; and the vehicle direction may be estimated from the edge portion.

In this case, based on the distortion corrected image, the vehicle direction estimation portion 34 performs detection of whether or not the tires of the front wheel 14 and the rear wheel 15 are present at both ends of the focused-on linear edge portion. For example, on the distortion corrected image, it is checked whether or not black regions having a predetermined size or larger are present at both ends of the focused-on linear edge portion or ellipse-shape edges are detected at the both ends; if the presence of the black regions are detected or the ellipse-shape edges are detected, it is determined that the tires of the front wheel 14 and the rear wheel 15 are present at both ends of the focused-on linear edge portion.

Here, it is desirable to detect both of the front wheel 14 and the rear wheel 15; however, only the front wheel 14 may be detected. In this case, it is detected whether or not the tire of the front wheel 14 is present at one end of the linear edge portion extracted by the edge extraction portion 33; only when the presence is detected, it is determined that the linear edge portion is the edge portion of the lower end 13; and the vehicle direction is estimated from the edge portion. The way of determining the presence/non-presence of the tire is as described above.

An image transform portion 35 as an image correction means corrects the distortion corrected image based on the vehicle direction estimated by the vehicle direction estimation portion 34. The image after this correction is called a direction corrected image. More specifically, based on the vehicle direction estimated by the vehicle direction estimation portion 34, an image transform parameter used to match the vehicle direction on the direction corrected image with a predetermined target direction is obtained; the distortion corrected image is transformed by using the image transform parameter, so that the direction corrected image is generated. The target direction is set at a vertical direction of the image, for example. In this case, the vehicle direction on the direction corrected image matches with the vertical direction of the direction corrected image.

The transform to obtain the direction corrected image is a geometric transform, typically, the Affine transform, for example, and the image transform parameter refers to a parameter that represents contents of the geometric transform. In a case where both of the rotational-axis direction of the door mirror 11 and the optical-axis direction of the camera 21 match with the plumb direction, the transform to obtain the direction corrected image is an image rotation.

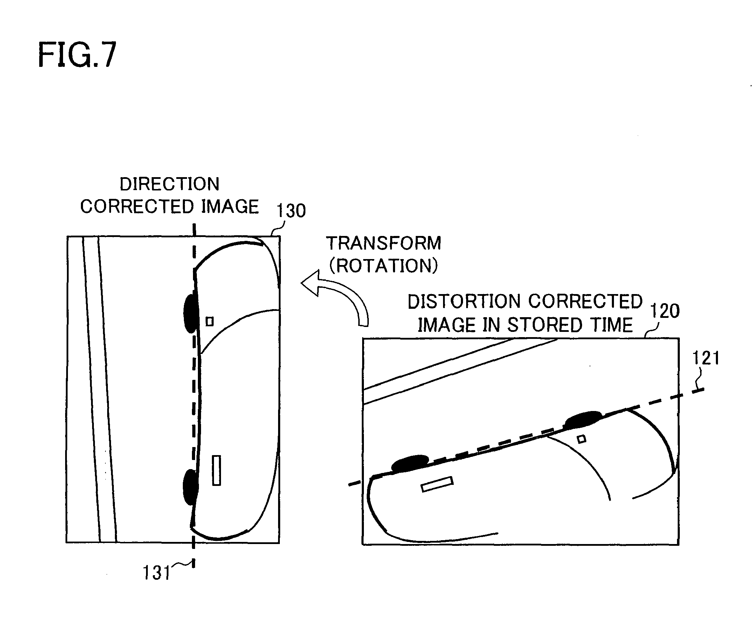

Fig. 7 shows a distortion corrected image 120 as a typical example of the distortion corrected image obtained in the stored time and a direction corrected image 130 obtained by transforming the distortion corrected image 120. In Fig. 7, a broken line 121 is a line along the vehicle direction on the distortion corrected image 120 that is estimated by the vehicle direction estimation portion 34; and a broken line 131 is a line along the vehicle direction on the direction corrected image 130. It is understood that the vehicle direction on the direction corrected image 130 faces the vertical direction of the direction corrected image 130. Here, in a case where the vehicle direction on the distortion corrected image already faces the target direction (in other words, the vehicle direction on the distortion corrected image faces the vertical direction of the distortion corrected image), the transform is not performed at the image transform portion 35, and the distortion corrected image itself is output as the direction corrected image.

If the optical-axis direction of the camera 21 is different from the plumb direction, an image transform parameter, which is used to match the vehicle direction on the direction corrected image with the target direction and to make a coordinate plane on which the direction corrected image is defined and the road surface parallel with each other, is obtained. The image transform parameter in this case includes components of a matrix (perspective projection matrix, projective transform matrix) that is used to project the coordinate plane for the distortion corrected image onto the road surface. The components of this matrix are predetermined based on camera external information such as the mounting angle, the installation height of the camera 21 and the like and camera internal information such as the focal length of the camera 21 and the like, or predetermined by camera calibration based on an image-taking result of the camera 21.

A display image generation portion 36 clips part of the direction corrected image generated by the image transform portion 35 and outputs image data of the image clipped (hereinafter, called a clipped image) to the display device 23. In this way, the clipped image is displayed on the display device 23. In a case where a wide angle lens is used in the camera 21, it is possible to take an image of a wide area; however, because the region where the driver needs to check is a surrounding area of the vehicle, it is desirable to perform the above clipping. For example, the clipping is performed in such a way that the vehicle direction is displayed longer than the orthogonal direction on a display screen of the display device 23. However, it is also possible to display the direction corrected image itself on the display device 23. Here, an image that indicates information such as a vehicle speed, a map and the like is combined with the clipped image from the direction corrected image or the direction corrected image itself, and the image after the combination may be displayed on the display device 23.

It is also possible to perform the estimation of the vehicle direction and the calculation of the image transform parameter based on the estimation result at every obtaining of the original image; however, those may be performed at necessary timing only. In this case, the calculated image transform parameter is stored and the transform of the distortion corrected image is performed by using the stored image transform parameter until a new image transform parameter is calculated. And, at a time point a new image transform parameter is calculated, the image transform parameter to be stored is updated with the new image transform parameter.

For example, a user may give a command for the timing to perform the estimation of the vehicle direction, the calculation and update of the image transform parameter based on the estimation result. The command by the user is transmitted to the image processing device 22 via an operation on a not-shown operation portion, for example.

Or, for example, the timing for the estimation of the vehicle direction, the calculation and update of the image transform parameter based on the estimation result may be decided on by using an operation time point of an operation button (not shown) for changing the disposition state of the door mirror 11 as a reference. Contents of the operation on the operation button are transmitted to the image processing device 22 and the image processing device 22 (in detail, a change recognition portion (not shown) in the image processing device 22) recognizes that the disposition state of the door mirror 11 is changed by the operation. After a predetermined time elapses from the recognition time point (in other words, after the predetermined time elapses from the operation time point of the operation button), the estimation of the vehicle direction is executed to calculate the new image transform parameter. This predetermined time is so set as to be longer than a drive time necessary to change the disposition state of the door mirror 11.

Further, or, for example, it is not at every obtaining of the original image, instead the estimation of the vehicle direction, the calculation and update of the image transform parameter based on the estimation result may be periodically performed. Correction of an error between an actual image transform parameter and an ideal image transform parameter is periodically performed by the periodic calculation and update of the image transform parameter.

The vehicle directions on the original image and on the distortion corrected image vary with a change in the disposition state of the door mirror 11; however , in the present embodiment, a correction is performed based on the image transform parameter in such a way that the change on the direction corrected image is cancelled. In this way, regardless of the disposition state of the door mirror 11, it is possible to represent an image, in which the vehicle direction is always constant, to the driver. In other words, even in a state in which the door mirror 11 is stored, it is possible to represent the same image as in the usual state to the driver. In achieving this, because the drive mechanism of the camera 21 is unnecessary, it is possible to compose the system at a low cost and simply. Here, the change in the vehicle direction on the direction corrected image due to the change in the disposition state of the door mirror 11 is completely cancelled ideally; however, because of various error factors, there is a possibility that the change is not completely cancelled. Accordingly, it is possible to replace the expression "cancel" with the expression "reduce."

Besides, because it is possible to estimate the vehicle direction on the image from the image based on the image-taking result and correct the image to be represented based on the estimation result, even if a deviation occurs in the storage position of the door mirror 11 and the like, it is easy to deal with. For example, in a case where a deviation occurs in the storage position of the door mirror 11 because of a collision between the door mirror 11 and an obstacle, an image transform parameter suitable for the deviation is recalculated by a command by the user for recalculation of the image transform parameter or the like, so that an image in which the deviation is corrected is represented.

Besides, the example in which the vehicle direction on the image is estimated by detecting the lower end 13 on the image is described; however, the vehicle direction on the image may be estimated by detecting an arbitrary edge portion (hereinafter, called a detected edge portion) that extends in a direction depending on the vehicle direction. In this case, operations of the edge extraction portion 33 and the vehicle direction estimation portion 34 are the same as the above operations. Specifically, the edge extraction portion 33 extracts an edge portion from the distortion corrected image and detects, from the extraction result, a detected edge portion on the distortion corrected image. And, the vehicle direction estimation portion 34 estimates a direction in which the detected edge portion extends on the distortion corrected image as the vehicle direction on the distortion corrected image. Because the lower end 13 extends in a direction substantially parallel to the vehicle direction, the lower end 13 is a kind of detected edge portion. Of course, in an actual space, the detected edge portion is covered in the view field of the camera 21.

For example, it is possible to use a door mall (not shown) mounted on a door of the vehicle 10 as the detected edge portion. The door mall is mounted on the door to cover an edge of the door of the vehicle 10 and a door mall at a lower end portion of the door extends, like the lower end 13, in a direction substantially parallel to the vehicle direction. Accordingly, it is possible to estimate the vehicle direction by using the door mall as the detected edge portion.

Or, for example, it is also possible to use an end of a step (not shown) disposed at a lower portion of a door of the vehicle 10 as the detected edge portion. The step here is a step that is mounted on the vehicle 10 for moving up and down in a case the vehicle 10 is relatively a large vehicle; and the end of the step is an end of a step parallel to the vehicle direction. Like the lower end 13, the end of the step extends in a direction substantially parallel to the vehicle direction. Accordingly, it is possible to estimate the vehicle direction by using the end of the step as the detected edge portion.

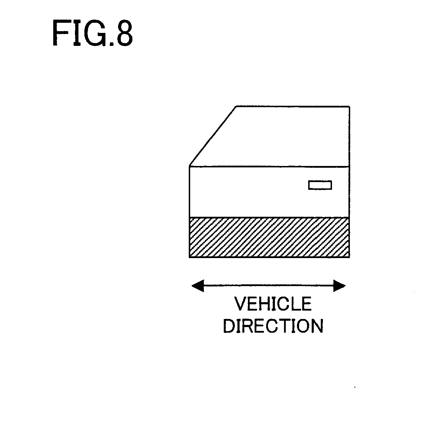

Or, for example, it is also possible to use a boundary (not shown) in a pattern of a door of the vehicle 10 as the detected edge portion. For example, it is supposed that an outer surface of a door of the vehicle 10 is patterned with a first color and a second color different from each other; and an upper half of the door and a lower half of the door have the first color and the second color, respectively. Fig. 8 is a view showing the door seen from the front. In this case, like the lower end 13, a boundary between the first-colored portion of the door and the second-colored portion of the door extends in a direction substantially parallel to the vehicle direction. Accordingly, it is possible to estimate the vehicle direction by using the boundary as the detected edge portion.

Here, in the above examples, the image transform parameter is applied to the image after the lens distortion correction; however, an image transform (e.g., the Affine transform) to perform the lens distortion correction is included into the image transform parameter and thus the direction corrected image may be generated from the original image at a time. In this case, the original image is input into the image transform portion 35. And, the image transform portion 35 obtains an image transform parameter for applying the lens distortion correction and a transform based on the estimated vehicle direction to the original image; and generates the direction corrected image by applying the image transform parameter to the original image.

Besides, the lens distortion correction itself becomes unnecessary depending on a camera used in some cases. In a case where the lens distortion correction is unnecessary, the lens distortion correction portion 32 is deleted from the image processing device 22 in Fig. 4; and instead of the distortion corrected image, the original image is given to the edge extraction portion 33 and the image transform portion 35.

It is possible to say that the door mirror 11 itself or the mirror case 11a of the door mirror 11 is the projection body for the vehicle main body 16 that are mounted on the outside of the vehicle main body 16 to protrude from the vehicle main body 16. However, the projection body is a movable projection body like the door mirror 11. The processes in the embodiments of the present invention are described on the supposition that the camera is mounted on the door mirror; the same process is possible even in a case where the camera is mounted on a fender mirror. However, it is supposed that the fender mirror is a movable fender mirror like the above door mirror 11. The door mirror and the fender mirror are each a kind of side mirror. The present invention is also applicable to a movable projection body that is not classified into the side mirror.

Besides, it is possible to achieve the image processing device 22 in Fig. 4 with hardware, or a combination of hardware and software. In a case where the image processing device 22 is composed by using software, a block diagram of each portion achieved by the software shows a functional block diagram of the portion. Besides, all or part of the functions achieved by the image processing device 22 are written as a program and all or part of the functions may be achieved by executing the program on a program execution device.

## Claims

1. An image processing device comprising:
an image obtaining means that obtains an input image based on an image-taking result of a camera which is mounted on a vehicle and covers part of a vehicle main body in a view field;
a vehicle direction estimation means that estimates a direction of the vehicle on the input image based on the input image; and
an image correction means that corrects the input image based on the estimated direction of the vehicle to generate an output image.

2. The image processing device according to claim 1, wherein
a projection body capable of changing a disposition state with respect to the vehicle main body is mounted on an outside of the vehicle main body;
the camera is mounted on the projection body and the view field of the camera changes together with a change in the disposition state; and
the image correction means applies a correction to the input image to reduce a change in the direction of the vehicle on the output image due to a change in the disposition state.

3. The image processing device according to claim 2, wherein
the image correction means corrects the input image in such a way that the direction of the vehicle on the output image becomes a predetermined direction.

4. The image processing device according to any one of claims 1 to 3, wherein
the vehicle direction estimation means detects an edge portion on the input image that extends in a direction depending on the direction of the vehicle, thereby estimating the direction of the vehicle.

5. The image processing device according to one of claims 2 and 3, wherein
the projection body is composed of a movable side mirror that is mounted on the vehicle main body.

6. The image processing device according to one of claims 2 and 3, further comprising a change recognition means that recognizes the change in the disposition state of the projection body; wherein
the vehicle direction estimation means estimates the direction of the vehicle after the recognition and at reference timing with respect to the recognition time point.

7. A driving assist system comprising the camera and the image processing device described in any one of claims 1 to 3; wherein
an image that is obtained via the correction of the image correction means of the image processing device is output to a display means.

8. A vehicle provided with the camera and the image processing device described in any one of claims 1 to 3.

9. An image processing method comprising the steps for:
obtaining an input image based on an image-taking result of a camera which is mounted on a vehicle and covers part of a vehicle main body in a view field;
estimating a direction of the vehicle on the input image based on the input image; and
correcting the input image based on the estimated direction of the vehicle.

## Amended claims

### Amended claims under Art. 19.1 PCT

1. (Amended) An image processing device comprising:
an image obtaining means that obtains an input image based on an image-taking result of a camera which is mounted on a vehicle and covers part of a vehicle main body in a view field;
a vehicle direction estimation means that based on the input image, detects an edge portion on the input image which extends in a direction depending on a direction of the vehicle and detects a tire of the vehicle in the direction in which the edge portion extends, thereby estimating the direction of the vehicle on the input image; and
an image correction means that corrects the input image based on the estimated direction of the vehicle to generate an output image.

2. The image processing device according to claim 1, wherein
a projection body capable of changing a disposition state with respect to the vehicle main body is mounted on an outside of the vehicle main body;
the camera is mounted on the projection body and the view field of the camera changes together with a change in the disposition state; and
the image correction means applies a correction to the input image to reduce a change in the direction of the vehicle on the output image due to a change in the disposition state.

3. The image processing device according to claim 2, wherein
the image correction means corrects the input image in such a way that the direction of the vehicle on the output image becomes a predetermined direction.

4. (Deleted)

5. The image processing device according to one of claims 2 and 3, wherein
the projection body is composed of a movable side mirror that is mounted on the vehicle main body.

6. The image processing device according to one of claims 2 and 3, further comprising a change recognition means that recognizes the change in the disposition state of the projection body; wherein
the vehicle direction estimation means estimates the direction of the vehicle after the recognition and at reference timing with respect to the recognition time point.

7. A driving assist system comprising the camera and the image processing device described in any one of claims 1 to 3; wherein
an image that is obtained via the correction of the image correction means of the image processing device is output to a display means.

8. A vehicle provided with the camera and the image processing device described in any one of claims 1 to 3.

9. (Amended) An image processing method comprising the steps for:
obtaining an input image based on an image-taking result of a camera which is mounted on a vehicle and covers part of a vehicle main body in a view field;
based on the input image, detecting an edge portion on the input image which extends in a direction depending on a direction of the vehicle and detecting a tire of the vehicle in the direction in which the edge portion extends, thereby estimating the direction of the vehicle on the input image; and
correcting the input image based on the estimated direction of the vehicle.

In this amendment, the contents of the original claim 4 and the use of a tire detection for the vehicle direction estimation are added to the claims 1 and 9. Because of this amendment, the claim 4 is deleted.

The item added to the claims 1 and 9 that the tire detection is used for the vehicle direction estimation is described in the paragraph [0042] and others of the specification at the time of filing. Accordingly, this amendment does not depart from the disclosure scope at the time of filing the international application.
